(19) Europäisches Patentamt
European Patent Office
Office européen des brevets

(11) Publication number: **0 532 940 B1**

(12) **EUROPEAN PATENT SPECIFICATION**


(45) Date of publication of patent specification: **10.05.95**

(51) Int. Cl.[6]: **G01J 1/00**

(21) Application number: **92114359.0**

(22) Date of filing: **22.08.92**


(54) **Method and apparatus for analyzing a lighting environment.**


(30) Priority: **22.08.91 JP 210709/91**
**01.10.91 JP 253539/91**
**31.01.92 JP 15816/92**

(43) Date of publication of application:
**24.03.93 Bulletin 93/12**

(45) Publication of the grant of the patent:
**10.05.95 Bulletin 95/19**

(84) Designated Contracting States:
**DE FR GB**


(56) References cited:


**PATENT ABSTRACTS OF JAPAN, vol. 9, no. 37 (P-335), 16 February 1985 & JP-A-59180337**

**I.E.E.E. COMPUTER GRAPHICS AND APPLICATIONS, no. 3, 1986, pages 26-5, M.F.COHEN ET AL: "An Efficient Radiosity Approach for Realistic Image Synthesis"**



(73) Proprietor: **MATSUSHITA ELECTRIC INDUSTRIAL CO., LTD.**
**1006, Oaza Kadoma**
**Kadoma-shi,**
**Osaka-fu, 571 (JP)**

(72) Inventor: **Hattori, Yoshihiro**
**5-16-2, Miyakojimahondori, Miykojima-ku**
**Osaka-shi,**
**Osaka-fu (JP)**
Inventor: **Nagamitsu, Sachio, Rune Fujinomori**
**609, 92-1**
**Mukaihata-cho,**
**Fukakusa,**
**Fushimi-ku**
**Kyoto-shi,**
**Kyoto-fu (JP)**
Inventor: **Kodama, Hisashi**
**3-6-3, Asukanokita**
**Ikoma-shi,**
**Nara-ken (JP)**

(74) Representative: **Eisenführ, Speiser & Partner**
**Martinistrasse 24**
**D-28195 Bremen (DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



EP 0 532 940 B1

## Description

## BACKGROUND OF THE INVENTION

### Field of the Invention

The present invention relates to a method of analyzing a lighting environment for use in simulating lighting or the like in a certain room by the use of a computer, and also to an analyzer for effecting this method.

### Description of the Prior Art

In installing lighting fixtures in a room, it is desired to quantitatively analyze a lighting environment, prior to the installation, by computing the illuminance, luminance or the like at various locations in the room. In applications where such an analysis is performed, reflected light from walls as well as direct light from light sources should be taken into consideration.

An approach for prediction of the global illumination function is disclosed in "An efficient radiosity approach for realistic image synthesis" Michael F. Cohen et al., IEEE Computer graphics and applications, No. 3, 1986, pages 26 - 35. In this approach, the integral relationship, i.e. the interaction of light, is approximated by a summation over discrete surface areas. The modelled environment is broken up into small surface patches for which a constant radiosity is assumed. At locations of high radiosity gradients, a substructuring method is applied in order to obtain solutions for local radiosity variations.

Conventionally, a computation wherein the reflected light is taken into consideration is carried out with the use of a radiosity algorithm (see "A Progressive Refinement Approach to Fast Radiosity Image Generation" Michael F. Cohen et al., Computer Graphics, Vol. 22, No. 4, August 1988 (SIGGRAPH '88 Conference Proceeding), pp. 75-84).

In this algorithm, ceilings, side walls, floors and any other structural elements constituting a room are initially divided into a large number of surface areas or patches. As a matter of course, an illuminating light source is contained in at least one of the surface areas or patches.

In view of this fact, of the patches, attention should first be paid to those patches radiating the most light energy, i.e., those patches containing illuminating light sources. Light is radiated from these patches in all directions. In determining the rate of light radiated from one patch which arrives at other patches, form-factors are initially computed based on the angle of radiation, the size of the patches and the like. A method of computing the form-factors is based on the number of lines emitted from one point (on the patch containing an illuminating light source) which arrive at other patches.

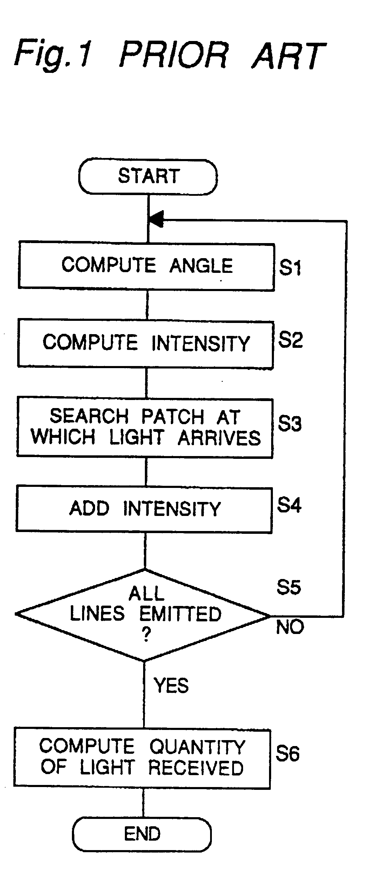

Fig. 1 is a flowchart indicating the procedure for computing the form-factors.

The angle of radiation of a light ray is computed at step S1. The luminous intensity of the light ray radiated at the computed angle is computed at step S2. The patch at which the light ray arrives is searched at step S3 based on the angle of radiation. The luminous intensity on the patch is computed at step S4 (the resultant value is cumulatively added). Step S5 determines as to whether computations have been terminated with respect to all lines emitted from said one point. If some lines remain to which computations have not been performed yet, the procedure returns to step S1 to compute the luminous intensity of light rays passing through those lines. If the radiation of light rays is terminated at all angles, the quantity of light radiated from said one point which arrives at each patch is computed at step S6.

Subsequently, of all the patches except the patch containing a light source, a patch having a largest luminous intensity is searched. This patch is regarded as a new light source and as a complete diffusing surface. Then, light is radiated from this patch in all directions, thereby gradually increasing the luminous,intensity of each patch. In this way, the quantity of all light rays received by each patch is computed with accuracy.

For the above computations, a computer simulation is generally available wherein the illuminance of walls, floors, ceilings, furnitures, household stuffs, and other objects is computed by tracing not only direct light rays from an illuminator and natural lighting but also light rays reflected several times by these structural elements. The above-mentioned computer simulation is capable of not only performing a simulation by the input of a variety of conditions, but also comparing simulation results by varying the input conditions. Because of this, the computer simulation can reduce the time required for computations with a higher accuracy, and is, therefore, very effective when it is extensively put to practical use.

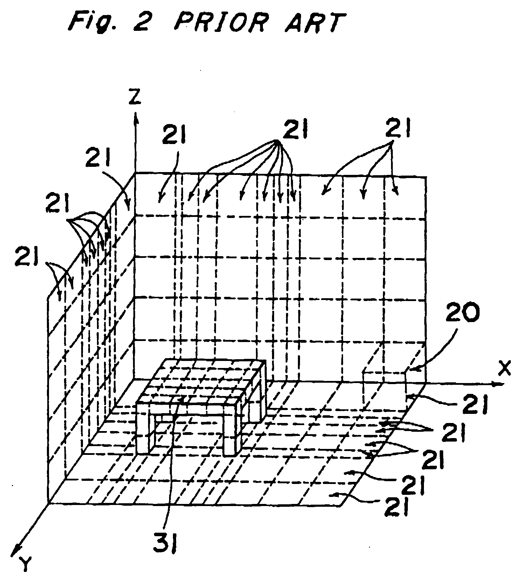

With reference to Figs. 2 to 4, an exemplified conventional method and apparatus for analyzing a light environment is hereinafter discussed wherein a computer simulation is employed.

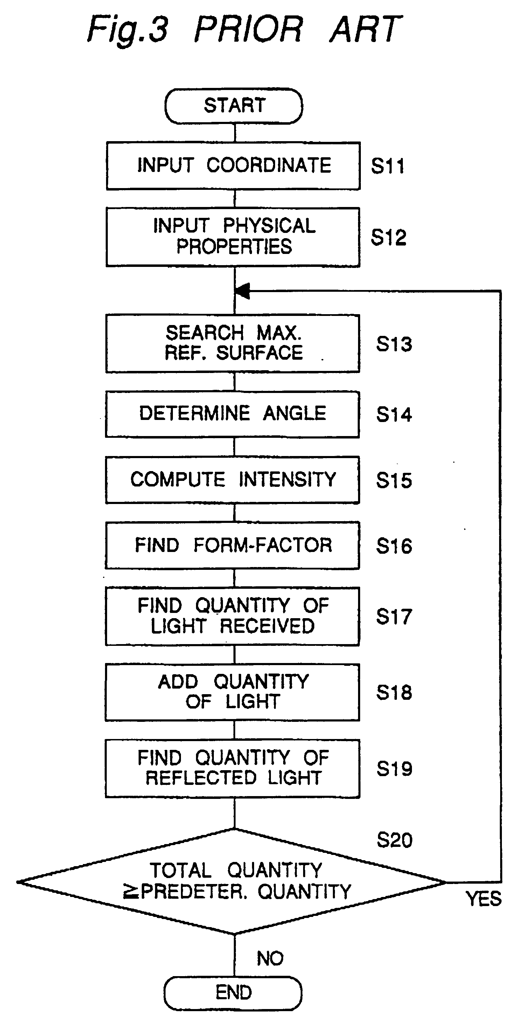

Fig. 3 is a flowchart indicating the procedure of the conventional method.

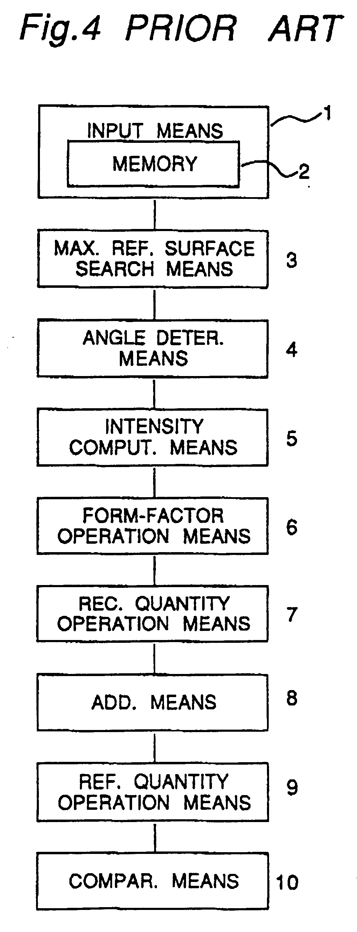

Step S11 is a tracing block and mesh coordinate input process wherein the entire internal space defined in a room or lighting environmental space to be analyzed are initially divided into a plurality of tracing blocks or hemi-cubes so that a computer can readily trace trails of light rays reflecting in the room. In Fig. 2, reference numeral 20 denotes one of the tracing blocks. In this process, coordinates of all the X-Y, Y-Z, and Z-X planes are inputted into a tracing block and mesh coordinate input means 1 shown in Fig. 4. The X-Y, Y-Z, and Z-X planes finely divide the surface of all objects such as walls, floors, ceilings, furnitures, and any other household stuffs constituting the entire internal surface of the room into tracing meshes each having an arbitrary rectangular configuration. In Fig. 2, reference numerals 21 denote the tracing meshes. Then, the tracing blocks 20 and the tracing meshes 21 are stored in a memory means 2 shown in Fig. 4. Thereafter, the procedure proceeds to step S12.

Step S12 is a physical property input process wherein, for each tracing mesh 21 obtained at step S11, the physical properties associated with light reception and reflection of an object having the tracing mesh 21 are inputted into and stored in the memory means 2.

Step S13 is a maximum reflective surface searching process wherein a maximum reflective surface searching means 3 shown in Fig. 4 searches the tracing mesh 21 having the maximum quantity of reflected light from among all the tracing meshes 21 obtained at step S11. As a matter of course, the target mesh is a tracing mesh containing a light source at first or a tracing mesh of which the product of the total quantity of light received thereby and the reflectance thereof is maximum at the time light radiated from the light source is being reflected. After the search operation completes, the procedure proceeds to step S14.

Step S14 is a light ray radiation angle determining process wherein a light ray radiation angle determining means 4 shown in Fig. 4 determines the radiation angles of a plurality of light rays radiated from the tracing mesh 21 searched at step S13 according to the quantity of light thereof. When the tracing mesh 21 contains a light source, the radiation angles are determined based on the luminous intensity distribution standards wherein the luminous intensity differs according to the direction of radiation and wherein the luminous intensity is highest in the frontward direction and is gradually reduced as the direction of radiation departs from the frontward direction. On the other hand, when the tracing mesh 21 is a reflective surface, the radiation angles are determined so that light rays may be reflected uniformly in all directions.

Step S15 is a luminous intensity computing process wherein a luminous intensity computing means 5 shown in Fig. 4 computes the luminous intensity of radiated light according to the direction of radiation. When the tracing mesh 21 having the maximum quantity of reflected light contains the light source, the luminous intensity of radiated light is computed based on the luminous intensity distribution standards. When the tracing mesh 21 is the reflective surface, the luminous intensity of radiated light is computed so that the reflection angles may follow Lambert's cosine law.

Step S16 is a form-factor operation process for each tracing mesh 21 wherein, when a plurality of light rays having respective radiation angles obtained at step S14 and respective luminous intensities obtained at step S15 are radiated from the tracing mesh 21 which has the maximum quantity of reflected light and has been searched at step S13, a form-factor operation means 6 shown in Fig. 4 searches a receiving tracing mesh 21 at which each light ray arrives successively through the tracing blocks 20 obtained at step S11 and computes the quantity of light received by the receiving tracing mesh 21. Also, the form-factor operation means 6 performs operations to obtain the ratio between the sum of the quantity of light received by each tracing mesh 21 and the total sum of the quantity of light received by all the tracing meshes 21. This ratio is the so-called form-factor for each tracing mesh 21.

Step S17 is a received light quantity operation process wherein a received light quantity operation means 7 shown in Fig. 4 performs operations to obtain the quantity of light received by each tracing mesh 21 based on the quantity of reflected light of the tracing mesh 21 having the maximum quantity of reflected light and the form factor of each tracing mesh 21 obtained at step S16.

Step S18 is an adding process wherein an adding means 8 shown in Fig. 4 cumulatively adds the quantity of light received by each tracing mesh 21 which has been obtained at step S17.

Step S19 is a reflected light quantity operation process wherein a reflected light quantity operation means 9 shown in Fig. 4 performs operations to obtain the quantity of reflected light of each tracing mesh 21 based on the cumulative quantity of light received thereby and the reflectance thereof.

Step S20 is a judging process wherein a comparing means 10 shown in Fig. 4 compares the total sum of the quantity of reflected light of all the tracing meshes 21 at that time with a predetermined quantity of light (normally about 5% of the total quantity of light radiated from the light source). When the total sum is not less than the predetermined quantity of light, the procedure returns to step S13. In contrast, when the former is less than the latter, the operations end.

In the above-mentioned conventional construction, all internal surfaces forming a lighting environmental space to be analyzed are divided into the tracing blocks 20 by a plurality of X-Y, Y-Z, and Z-X planes, and all surfaces of each of the aforementioned objects constituting the entire internal surface of the lighting environmental space are finely divided by additional X-Y, Y-Z, and Z-X planes into the tracing meshes 21 each having an arbitrary rectangular configuration, as shown in Fig. 2. By doing so, the computer can readily trace trails of light rays which are being reflected inside the room. In this construction, however, wall surfaces are initially divided into large tracing meshes and are further divided into small tracing meshes by the additional X-Y, Y-Z, and Z-X planes due to the presence of furnitures. Because of this, some tracing meshes of the wall surfaces take the form of relatively small tracing meshes 21 or flat tracing meshes 21 having a large aspect ratio under the influence of the configuration of the furnitures. However, it is not necessary to divide the wall surfaces into such small tracing meshes.

When the small tracing meshes 21 are used, operations required to obtain the trails of light rays, the quantity of reflected light, and the quantity of light received by each tracing mesh need a lot of time, thus resulting in lack of practicability.

In operations to obtain the quantity of reflected light of the flat tracing meshes 21 having a large aspect ratio, because the computer regards them as containing a point light source irrespective of the configuration thereof, the operation result is substantially the same as that of a case where tracing meshes 21 having an aspect ratio of one contain a light source, thereby causing errors.

In operations to obtain the quantity of light received by the flat tracing meshes 21 having a large aspect ratio, the computer is not free from errors. Accordingly, the presence of the flat tracing meshes 21 having a large aspect ratio enlarges the errors.

In addition, walls, ceilings, floors and any other structural elements constituting a room have all hitherto been regarded as complete diffusing surfaces.

Actually, however, some rooms are provided with a mirror or mirrors or other surfaces effecting mirror reflection. Also, there may be some surfaces effecting both diffusion reflection and mirror reflection.

There have been proposed no practical methods capable of accurately simulating a lighting environment, taking reflection into account.

## SUMMARY OF THE INVENTION

The present invention has been developed to overcome the above-described disadvantages.

It is accordingly an object of the present invention to provide an improved method and apparatus of analyzing a lighting environment, which can reduce errors and requires only a short simulation time.

Another object of the present invention is to provide a method and apparatus of the above-described type wherein mirror reflection is taken into account.

In accomplishing the above and other objects, a method according to the present invention comprises the steps of:

(a) dividing a lighting environment into a plurality of blocks, thereby dividing all surfaces defining the lighting environment into a plurality of surface patches;

(b) searching a first surface patch radiating a most light energy;

(c) determining as to whether a quantity of light radiated from the first surface patch exceeds a given value; and

(d) computing the quantity of light radiated from the first surface patch which arrives at each of the plurality of surface patches.

The step (d) comprises the steps of:

(d1) computing an angle of radiation of a light ray radiated from the first surface patch;

(d2) computing a luminous intensity of the light ray associated with the angle of radiation;

(d3) searching a second surface patch at which the light ray arrives;

(d4) adding the luminous intensity of the light ray at the second surface patch;

(d5) determining as to whether the second surface patch is a mirror surface;

(d6) multiplying, if the second surface patch is a mirror surface, the luminous intensity obtained at step (d4) by a mirror surface reflectance;

(d7) deriving an angle of reflection from an angle of incidence of the light ray relative to the mirror surface; and

(d8) determining as to whether the number of light rays radiated from the first surface patch exceeds a given number.

The method according to the present invention further comprises the steps of:

(e) adding the quantity of light which arrives at the second surface patch;

(f) multiplying the quantity of light obtained at step (e) by a diffuse reflectance of the second surface patch;

(g) clearing the quantity of light to be radiated from the first surface patch to zero; and

(h) repeating the steps (b) to (f).

In the method according to the present invention, because mirror reflection is taken into account, illuminance or luminance in the lighting environment can be obtained with accuracy.

Preferably, the number of light rays radiated from the first surface patch is changed according to the quantity of light radiated therefrom.

By doing so, the time required for operations can be shortened without lowering the accuracy thereof.

Even in applications where one or more objects are provided in a lighting environment, a method according to the present invention can simulate lighting in the lighting environment by tracing trails of light rays from a light source and those of light rays reflected by various surfaces defining the lighting environment. In such cases, the method preferably comprises the steps of:

inputting into an operation means coordinates of a plurality of planes extending in three directions perpendicular to each other;

dividing an entire internal space defined in the lighting environment into a plurality of blocks by the plurality of planes, thereby finely dividing all surfaces constituting an entire internal surface of the lighting environment into a plurality of first meshes each having an arbitrary rectangular configuration;

combining and/or dividing small meshes and flat meshes among all the first meshes except those of the object to reform them into second meshes having an aspect ratio closer to one and greater dimensions;

performing operations to obtain a quantity of light received by each of the first and second meshes by making the operation means trace the trails of the light rays which pass through the blocks; and

performing operations to obtain a quantity of reflected light of each of the first and second meshes in accordance with a quantity of light received thereby.

In another aspect of the present invention, an apparatus for analyzing a lighting environment comprises:

means for dividing a lighting environment into a plurality of blocks, thereby dividing all surfaces defining the lighting environment into a plurality of surface patches;

means for searching a first surface patch radiating a most light energy;

means for determining as to whether a quantity of light radiated from the first surface patch exceeds a given value;

means for computing the quantity of light radiated from the first surface patch which arrives at each of the plurality of surface patches; and

means for computing a quantity of light which arrives at each of the surface patches.

Said means for computing the quantity of light comprises:

means for computing an angle of radiation of each of a plurality of light, rays radiated from the first surface patch;

means for searching a second surface patch at which each light ray arrives;

means for determining as to whether the second surface patch is a mirror surface; and

means for deriving an angle of reflection from an angle of incidence of a light ray reflected by the mirror surface.

Said means for searching the first surface patch also searches a surface patch at which the light ray reflected by the mirror surface arrives.

Preferably, the apparatus further comprises means for determining the number of light rays radiated from the first surface patch according to the quantity of light radiated therefrom.

The apparatus according to the present invention can analyzing a lighting environment accommodating one or more objects. The apparatus simulates lighting in the lighting environment by tracing trails of light rays from a light source and those of light rays reflected by various surfaces defining the lighting environment.

In this case, the apparatus comprises:

a computer means;

means for inputting into the computer means coordinates of a plurality of planes extending in three directions perpendicular to each other; and

means for dividing an entire internal space defined in the lighting environment into a plurality of blocks by the plurality of planes, thereby finely dividing all surfaces constituting an entire internal surface of the lighting environment into a plurality of first meshes each having an arbitrary rectangular configuration.

The apparatus further comprises:

means for combining and/or dividing small meshes and flat meshes among all the first meshes except those of the object to reform the small meshes and the flat meshes into second meshes having an aspect ratio closer to one and greater dimensions;

means for performing operations to obtain a quantity of light received by each of the first and second meshes by making the computer means trace the trails of the light rays which pass through the blocks; and

means for performing operations to obtain a quantity of reflected light of each of the first and second meshes in accordance with a quantity of light received thereby.

The apparatus having the above-described construction reforms small or flat meshes into meshes having an aspect ratio closer to one and greater dimensions, thereby reducing the number of meshes. As a result, not only the time required to perform a simulation is shortened but also errors, which may occur during operations, are reduced.

## BRIEF DESCRIPTION OF THE DRAWINGS

The above and other objects and features of the present invention will become more apparent from the following description of a preferred embodiment thereof with reference to the accompanying drawings, throughout which like parts are designated by like reference numerals, and wherein:

Fig. 1 is a flowchart indicating a conventional method of analyzing a lighting environment;

Fig. 2 is a perspective view of tracing blocks and tracing meshes in the case where the lighting environment is divided by the conventional method;

Fig. 3 is a flowchart indicating the detailed procedure of the conventional method;

Fig. 4 is a block diagram indicating a conventional apparatus for analyzing a lighting environment;

Fig. 5 is a flowchart indicating a method according to the present invention;

Fig. 6 is a schematic perspective view of a lighting environment to which the present invention is applied;

Fig. 7 is a flowchart indicating the detailed procedure for computing the quantity of light received by each of a plurality of surface patches;

Fig. 8 is a view similar to Fig. 6, but particularly indicating the direction in which light rays radiated from a light source advance;

Fig. 9 is a perspective view of an imaginary hemisphere which is supposed to lie over the center of each surface patch;

Fig. 10 is a perspective view of the hemisphere having a plurality of generally equally divided sections;

Fig. 11 is a flowchart indicating how to divide the hemisphere;

Fig. 12 is a flowchart indicating the procedure for finding the surface patch at which each light ray arrives;

Fig. 13 is a graph indicating the relationship between the number of light rays radiated and errors which would occur in computing the quantity of light received by each surface patch;

Fig. 14 is a schematic perspective view of a lighting environment to which the present invention is applied;

Fig. 15 is a schematic perspective view of tracing blocks and tracing meshes in the lighting environment of Fig. 14;

Fig. 16 is a flowchart indicating the detailed procedure of the method according to the present invention; and

Fig. 17 is a block diagram of the apparatus according to the present invention.

## DETAILED DESCRIPTION OF THE PREFERRED EMBODIMENTS

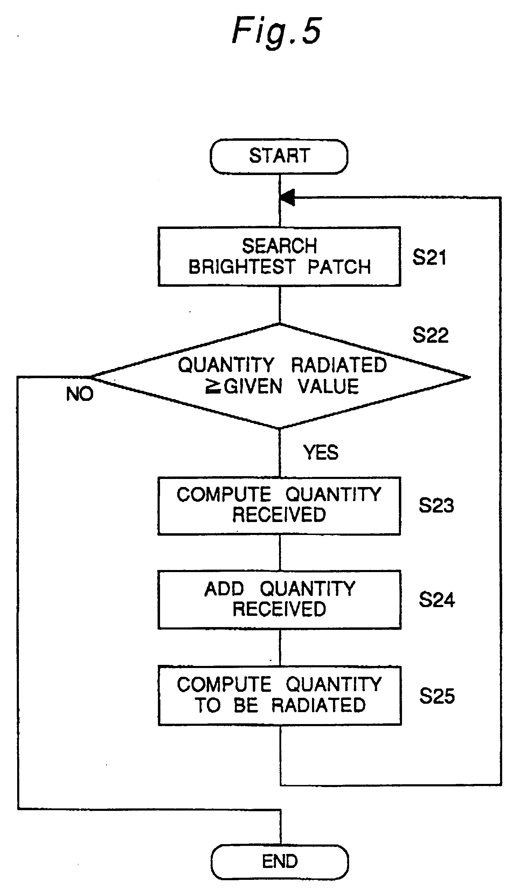

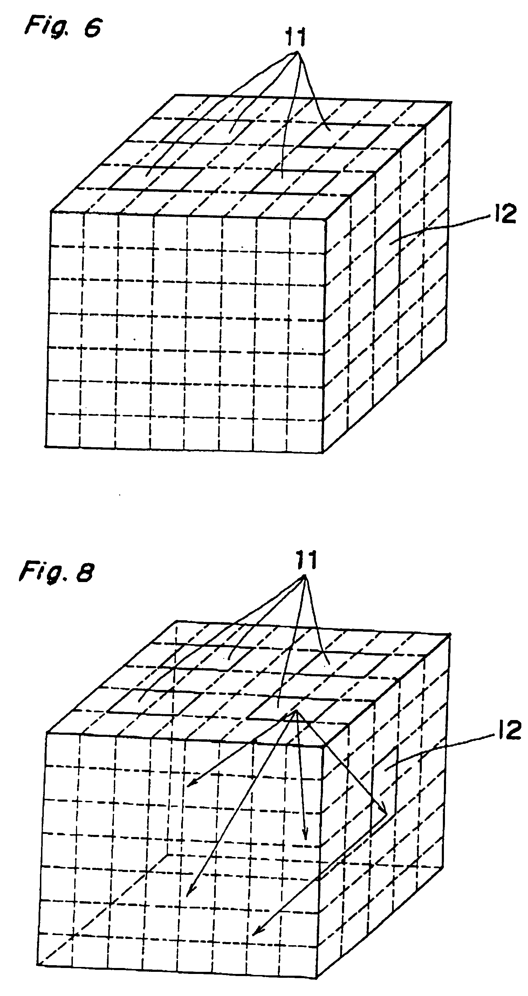

Referring now to the drawings, there is shown in Fig. 5 a flowchart indicating a method of analyzing a lighting environment according to the present invention. At step S21, a three-dimensional space as shown in Fig. 6 i.e., a lighting environment are initially divided into a number of tracing blocks by a plurality of planes. Of all surface areas or patches of the tracing blocks, one surface patch radiating the most light energy is searched. Light is radiated from this surface patch in all directions. First, one of those patches 11 containing an illuminating light source is selected. When there exist a plurality of illuminating light sources, the brightest light source is selected. In Fig. 6, reference numeral 12 denotes a mirror surface.

Step S22 determines as to whether the quantity of light radiated from the selected patch exceeds a given value. The quantity of light radiated from the light source 11 which arrives at each patch is then computed at step S23. At the next step S24, for each patch, the quantity of light which arrives at the patch is added. The quantity of light obtained by multiplying the resultant value by a diffuse reflectance is a quantity of light to be radiated from each patch, which is subsequently regarded as a light source. This quantity of light is computed at step S25. At this moment, each patch is regarded as a complete diffusing surface. The quantity of light to be radiated from the patch which has completed radiation is cleared to zero. Thereafter, the procedure returns to step S21 to search the patch of which the quantity of light obtained at step S25 is greater than that of any other surface patches.

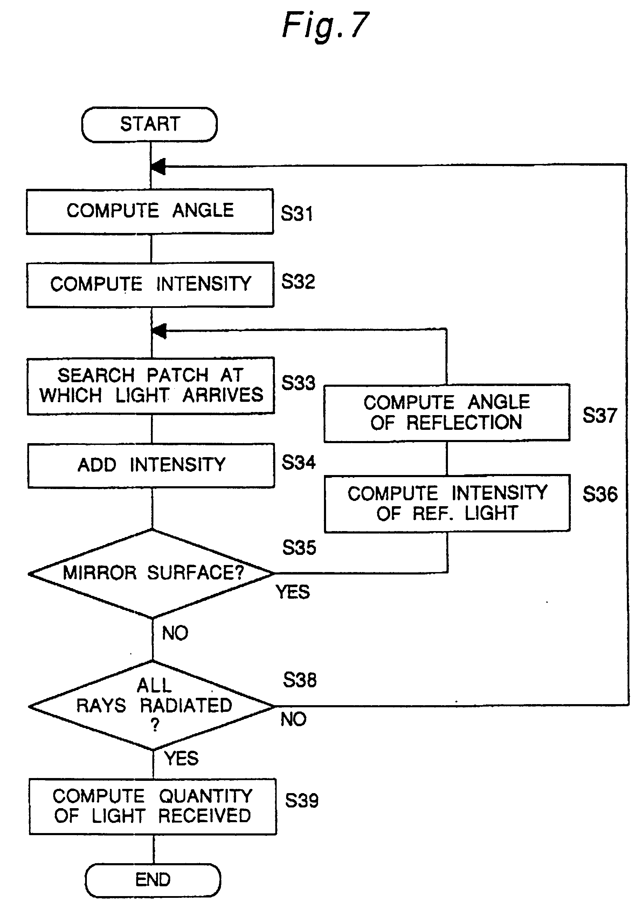

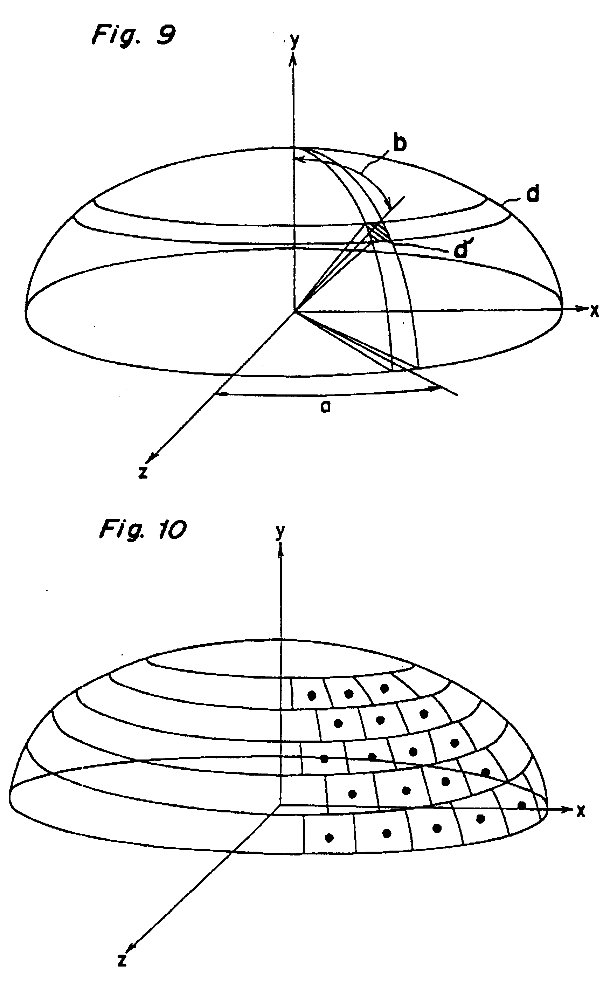

Fig. 7 is a flowchart indicating details of operations performed at step S23 in the flowchart of Fig. 5. As shown in Fig. 8, light is radiated from a radiation surface in all directions, and the quantity of light which arrives at each patch is computed.

In the flowchart of Fig. 7, the angle of radiation of a light ray is initially computed at step S31. The luminous intensity of the light ray radiated at the computed angle is computed at step S32. In computing the angle of radiation and the luminous intensity of the light ray, an imaginary hemisphere is supposed to lie over the center of the patch, as shown in Fig. 9. This hemisphere is divided into a large number of trapezoids, the location of each of which is indicated by a zenithal angle (b) and a horizontal angle (a).

Fig. 10 depicts the hemisphere having a large number of substantially equally divided sections, each of which is close to a square. In other words, in Fig. 9, the length of (d) is nearly equal to that of (d'). It is supposed that a plurality of light rays are radiated from a light source in generally equally spaced different directions and pass through the centers of all the sections shown by black dots in Fig. 10. The angle of radiation and the luminous intensity of each light ray determined at steps S31 and S32 depend on the number of light rays radiated.

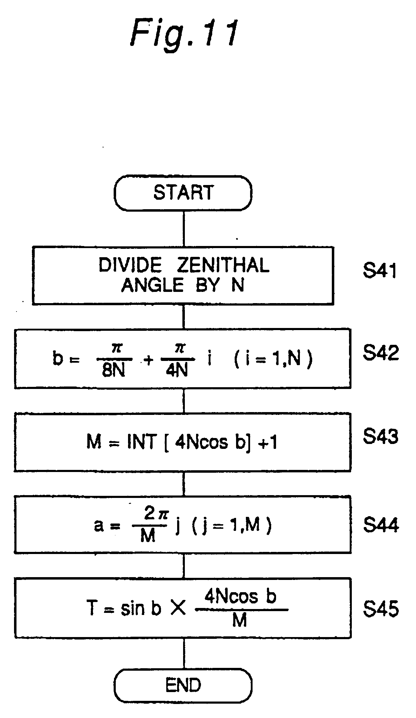

More specifically, the angle of radiation and the luminous intensity are computed in a manner such as shown in a flowchart of Fig. 11. In this flowchart, the number N into which the zenithal angle is divided is initially inputted at step S41. At step S42, the zenithal angle (b) shown in Fig. 9 is given by:

$$b=\frac{\pi}{8N}+\frac{\pi}{4N}i \qquad (i=1,N)$$

where i is on integer ranging from 1 to N.
At step S43, the number M into which the horizontal angle is divided is given by:

$$M = INT[4N\cos b] + 1$$

Both the number M and the zenithal angle (b) are integers. At step S44, the horizontal angle (a) shown in Fig. 9 is given by:

$$a=\frac{2\pi}{M}j \qquad (j=1,M)$$

At step S45, the luminous intensity of light is given by:

$$T=\sin b\times\frac{4N\cos b}{M}$$

In consideration of Lambert's cosine law, the luminous intensity of light will attain a value reduced a quantity by which the dividend (the number of division) is rounded up to an integer so that the product of the luminous intensity of light and the area of each section may not be changed by the round-up. In this way, for each section, the zenithal angle, the horizontal angle, and the luminous intensity of a light ray to be radiated are determined. Also, the number of light rays to be radiated is determined.

Referring back to the flowchart of Fig. 7, the surface patch to which the light ray is radiated is searched at step S33 followed by step S34 at which the luminous intensity of the light ray which arrives at the surface patch is added. Step S35 determines as to whether the surface patch is a mirror surface 12. If the determination at step S35 is YES, the luminous intensity of a light ray which is reflected by the mirror surface 12 is obtained by multiplying the luminous intensity obtained at step S34 by a mirror surface reflectance at step S36. At step S37, the angle of reflection is derived from the angle of incidence. Thereafter, the chase of the reflected light is repeated at steps S33-S35.

If the light ray arrives at a surface patch which causes no mirror surface reflection, the chase is terminated at step S35. Step S38 determines as to whether all the light rays are radiated from the aforementioned illuminating light source. If all the light rays are not radiated, the procedure returns to step S31 from which the chase of each of other light rays radiated at different angles is carried out.

If the radiation of all the light rays is terminated, the quantity of light which arrives at each patch is computed at step S39. The quantity of light to be received by the patch is given by $E\times G/F$, where E denotes the quantity of light radiated from the radiation surface, F the total luminous intensity of the radiated light, and G the luminous intensity of the light received by the patch.

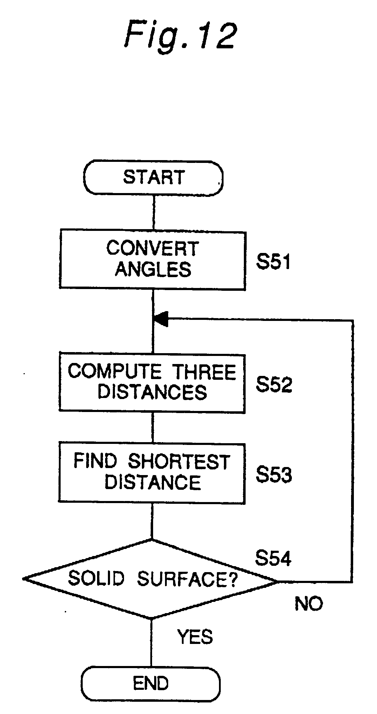

Fig. 12 is a flowchart indicating a detailed search performed at step S33 in the flowchart of Fig. 7. The light ray radiated at the computed zenithal angle and the horizontal angle successively passes through one tracing block to the next. In view of this fact, at step S51, the zenithal angle and the horizontal angle shown in Fig. 9 are converted into three-directional components in a rectangular coordinate system. Whenever the light ray arrives at each tracing block, the distance between the point of incidence and the next tracing mesh is computed in each of the three directions at step S52. Of the three distances computed at step S52, the shortest distance is obtained at step S53. Step S54 determines as to whether the tracing mesh closest to the point of incidence is a solid surface. If this tracing mesh is the solid surface, the chase of light rays radiated therefrom at different angles can be readily performed by changing the coordinates thereof based on converted data. If the tracing mesh is a mirror surface, the angle of reflection can be obtained by changing the sign of one of the three-directional components. In this way, the surfaces at which each light ray arrives are searched.

Referring back to the flowchart of Fig. 5, if it is determined at step S22 that the quantity of light radiated from the selected patch is greater than the given value, the steps S23-25, S21, and S22 are repeated.

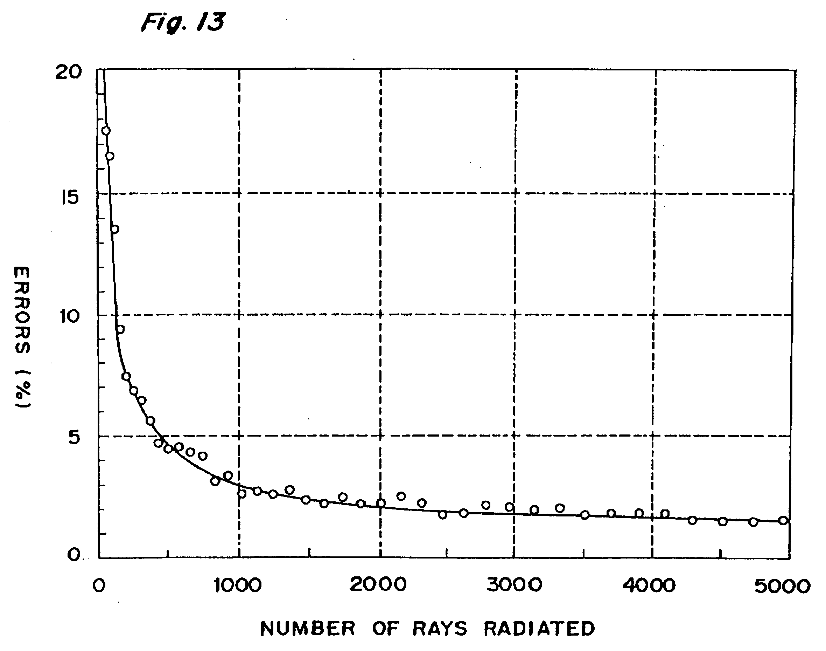

As to the radiation on a reflective surface, errors can be reduced by increasing the number of light rays radiated therefrom, as best shown in a graph of Fig. 13. However, the number of light rays radiated from the reflective surface is not necessarily required to be equal to the number of light rays radiated from a light source. For example, when a quantity of light of 2500 lumens and that of 500 lumens are radiated from the light source and the reflective surface, respectively, the quantity of light received by other surface patches can be computed with a reduced accuracy with respect to the light rays radiated from the reflective surface. In other words, the number of light rays radiated from the reflective surface may be less than that of light rays radiated from the light source. By doing so, the time required for computations can be reduced. The number of light rays to be radiated from each patch is determined based on the relationship between the quantity of light radiated therefrom and the desired accuracy. Preferably, the number of light rays radiated from each patch is reduced with the reduction in the quantity of light radiated therefrom. In this way, the illuminance of all the surface patches and the quantity of light diffused therefrom can be known in the lighting environment shown in Fig. 6.

In the flowchart of Fig. 5, if the quantity of light radiated from each patch is less than the given value, the simulation is terminated.

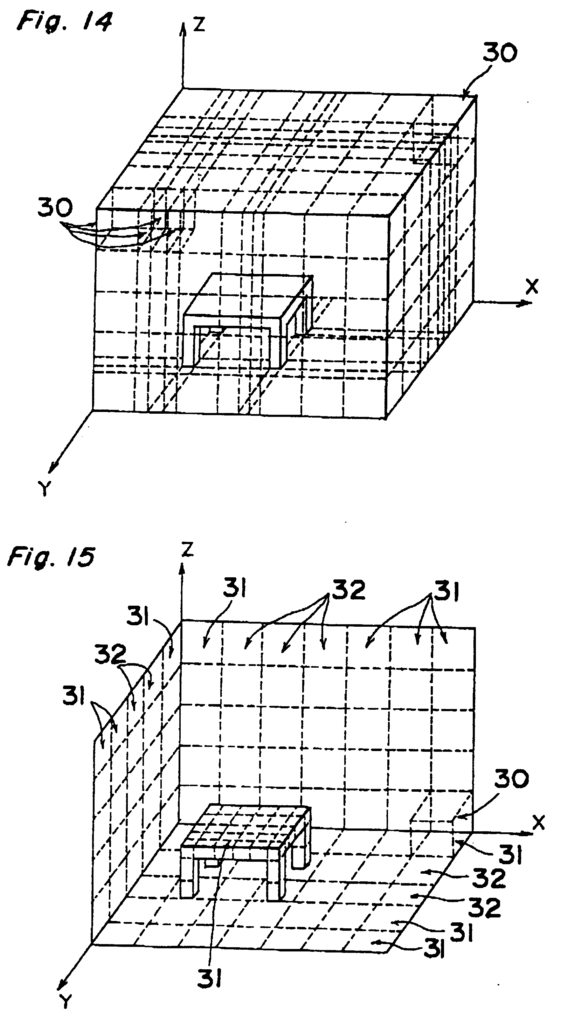

The search for the surfaces at which each light ray arrives is hereinafter discussed in detail with reference to Figs. 14 to 17.

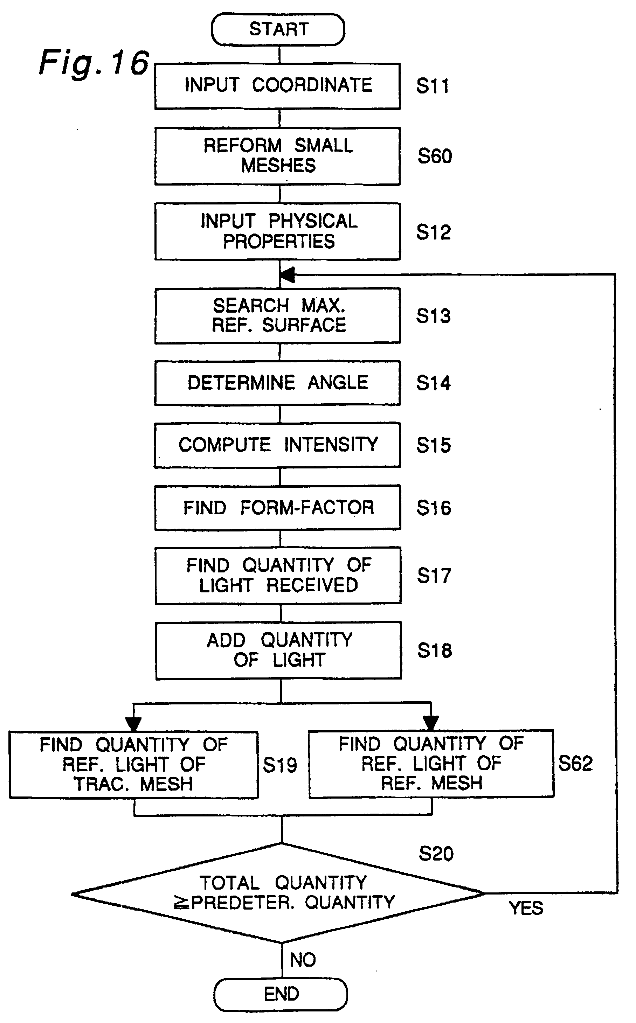

A flowchart shown in Fig. 16 differs from the flowchart of the conventional case shown in Fig. 3 in that the former includes steps S60 and S62. Step S60 indicates a mesh reformation process and is inserted in between step S11 and step S12. Step S62 indicates a reflected light quantity operation process for each reflective light source and is inserted in between step S18 and step S20 in parallel with step S19.

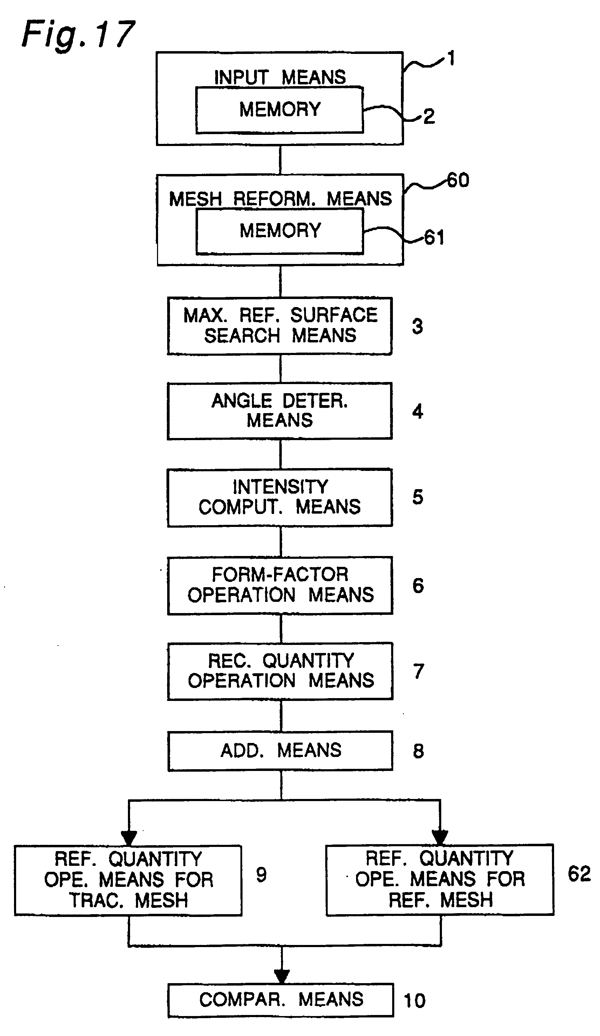

A block diagram shown in Fig. 17 embodying the present invention differs from the block diagram of the conventional case shown in Fig. 4 in that, for each reflective light source, a mesh reformation means 60 and a reflected light quantity operation means 62 are additionally provided in the former.

Step S11 is a tracing block and mesh coordinate input process wherein the entire internal space defined in a room or lighting environmental space to he analyzed are initially divided into a plurality of tracing blocks or hemi-cubes by a plurality of X-Y, Y-Z, and Z-X planes crossing at right angles so that a computer can readily trace trails of light rays reflecting in the room. In Figs. 14 and 15, reference numeral 30 denotes one of the tracing blocks. In this process, coordinates of all the X-Y, Y-Z, and Z-X planes are inputted into a tracing block and mesh coordinate input means 1 shown in Fig. 17. The X-Y, Y-Z, and Z-X planes finely divide the surface of all objects such as walls, floors, ceilings, furnitures, and any other household stuffs constituting the entire internal surface of the room into a plurality of tracing meshes each having an arbitrary rectangular configuration. At this moment, some of the tracing meshes take the form of small or flat rectangles due to the presence of the furnitures or other household stuffs, as shown in Fig. 14.

In Fig. 15, reference numerals 31 denote the tracing meshes. Then, the tracing blocks 30 and the tracing meshes 31 are stored in a memory means 2 shown in Fig. 17. Thereafter, the procedure proceeds to step S60.

Step S60 is a mesh reformation process wherein the mesh reformation means 60 combines and/or divides smaller ones and flat ones among the tracing meshes 31 except those of the furnitures or other household stuffs, thereby reforming them into meshes having an aspect ratio closer to one and greater dimensions. In Fig. 15, reference numerals 32 denote such meshes which are subsequently regarded as containing a light source and from which reflected light is radiated. These meshes are hereinafter referred to as reflective meshes. The reflective meshes 32 are stored in a memory means 61 provided in the mesh reformation means 60.

Step S12 is a physical property input process wherein, for each tracing mesh 31 obtained at step S11 and each reflective mesh 32 obtained at step S60, the physical properties associated with light reception and reflection of an object having the tracing mesh 31 or the reflective mesh 32 are inputted into and stored in the memory means 2 and 61, respectively.

Step S13 is a maximum reflective surface searching process wherein a maximum reflective surface searching means 3 shown in Fig. 17 searches the tracing mesh 31 or the reflective mesh 32 having the maximum quantity of reflected light from among all the tracing meshes 31 obtained at step S11 and the reflective meshes 32. As a matter of course, the target mesh is a tracing mesh containing a light source at first or a tracing mesh 31 or reflective mesh 32 of which the product of the total quantity of light received thereby and the reflectance thereof is maximum at the time light radiated from the light source is being reflected. After the search operation completes, the procedure proceeds to step S14.

Step S14 is a light ray radiation angle determining process wherein a light ray radiation angle determining means 4 shown in Fig. 17 determines the radiation angles of a plurality of light rays radiated from the tracing mesh 31 or the reflective mesh 32 searched at step S13 according to the quantity of light thereof. When the tracing mesh 31 contains a light source, the radiation angles are determined based on the luminous intensity distribution standards. On the other hand, when the tracing mesh 31 or the reflective mesh 32 contains no light source, the radiation angles are determined so that light rays may be reflected uniformly in all directions.

Step S15 is a luminous intensity computing process wherein a luminous intensity computing means 5 shown in Fig. 17 computes the luminous intensity of radiated light according to the direction of radiation. When the tracing mesh 31 having the maximum quantity of reflected light contains the light source, the luminous intensity of radiated light is computed based on the luminous intensity distribution standards. When the tracing mesh 31 or the reflective mesh 32 contains no light source, the luminous intensity of radiated light is computed so that the reflection angles may follow Lambert's cosine law.

Step S16 is a form-factor operation process for each tracing mesh 31 or reflective mesh 32 wherein, when a plurality of light rays having respective radiation angles obtained at step S14 and respective luminous intensities obtained at step S15 are radiated from the tracing mesh 31 or the reflective mesh 32 which has the maximum quantity of reflected light and has been searched at step S13, a form-factor operation means 6 shown in Fig. 17 searches a receiving tracing mesh 31 or reflective mesh 32 at which each light ray arrives successively through the tracing blocks 30 obtained at step S11 and computes the quantity of light received thereby. Also, the form-factor operation means 6 performs operations to obtain the ratio between the sum of the quantity of light received by each tracing mesh 31 or reflective mesh 32 and the total sum of the quantity of light received by all the tracing meshes 31 or reflective meshes 32. This ratio is a form-factor for each tracing mesh 31 or reflective mesh 32. In this case, the light arriving at each reflective mesh 32 is computed as the quantity of light arriving at the tracing mesh 31 constituting the reflective mesh 32.

Step S17 is a received light quantity operation process wherein a received light quantity operation means 7 shown in Fig. 17 performs operations to obtain the quantity of light received by each tracing mesh 31 or reflective mesh 32 based on the quantity of reflected light of the tracing mesh 31 or reflective mesh 32 having the maximum quantity of reflected light and the form factor of each tracing mesh 31 or reflective mesh 32.

Step S18 is an adding process wherein an adding means 8 shown In Fig. 17 cumulatively adds the quantity of light received by each tracing mesh 31 or reflective mesh 32 which has been obtained at step S17. Thereafter, the procedure proceeds to steps S19 and S62.

Step S19 is a reflected light quantity operation process wherein a reflected light quantity operation means 9 shown in Fig. 17 performs operations to obtain the quantity of reflected light of each tracing mesh 31 based on the cumulative quantity of light received thereby and the reflectance thereof.

Step S62 is a reflected light quantity operation process for each reflective mesh 32 wherein a reflected light quantity operation means 62 shown in Fig. 17 performs operations to obtain the quantity of reflected light of each reflective mesh 32 based on the cumulative quantity of light received thereby and the reflectance thereof.

Step S20 is a judging process wherein a comparing means 10 shown in Fig. 17 compares the total sum of the quantity of reflected light of all the tracing meshes 31 and the reflective meshes 32 at that time with a predetermined quantity of light (normally about 5% of the total quantity of light radiated from the light source). When the total sum is not less than the predetermined quantity of light, the procedure returns to step S13. In contrast, when the former is less than the latter, the operations end.

The conventional method and apparatus require a comparatively long time for operations due to the presence of small tracing meshes, thus resulting in lack of practicability. Furthermore, the presence of flat tracing meshes having a large aspect ratio causes large operation errors.

According to the present invention, however, small or flat tracing meshes among all the tracing meshes are combined and/or divided into reflective meshes each having an aspect ratio closer to one and greater dimensions, thereby reducing the number of meshes and correcting the configuration thereof. By doing so, the following effects are obtained.

(i) The reduction in the number of meshes shortens the time required for operations to assure an enhanced practicability as compared with the conventional technique.

(ii) The corrected configuration of the meshes eliminates errors which may occur in operations required to obtain the quantity of reflected light and the quantity of light received, thereby achieving a lighting environmental analysis with higher accuracy.

Furthermore, because mirror reflection is taken into account in the analysis of the lighting environment, the present invention is useful for developing or designing lighting fixtures.

In addition, because the number of light rays to be radiated from each surface patch is determined according to the quantity of light radiated therefrom, the time required for operations can be shortened with the accuracy of the analysis maintained.

Although the present invention has been fully described by way of examples with reference to the accompanying drawings, it is to be noted here that various changes and modifications will be apparent to those skilled in the art. Therefore, unless such changes and modifications otherwise depart from the spirit and scope of the present invention, they should be construed as being included therein.

## Claims

**1.** A method of analyzing a lighting environment comprising the steps of:

(a) dividing a lighting environment into a plurality of blocks (30), thereby dividing all surfaces defining said lighting environment into a plurality of surface patches;

characterized by

(b) searching a first surface patch (11) radiating the most light energy;

(c) determining as to whether a quantity of light radiated from said first surface patch (11) exceeds a given value;

(d) computing the quantity of light radiated from said first surface patch (11) which arrives at each of said plurality of surface patches, said step (d) comprising the steps of:

(d1) computing an angle of radiation of a light ray radiated from said first surface patch (11);

(d2) computing a luminous intensity of said light ray associated with said angle of radiation;

(d3) searching a second surface patch at which said light ray arrives;

(d4) adding said luminous intensity of said light ray at said second surface patch; and

(d5) determining as to whether the number of light rays radiated from said first surface patch (11) exceeds a given number, said number of light rays depending on the quantity of light radiated from said first surface patch (11);

(e) adding the quantity of light which arrives at said second surface patch;

(f) multiplying the quantity of light obtained at step (e) by a diffuse reflectance of said second surface patch;

(g) clearing the quantity of light to be radiated from said first surface patch (11) to zero;

(h) repeating said steps (b) to (f).

**2.** A method according to claim 1 wherein said step (d4) comprising the steps of:

(d41) determining as to whether said second surface patch is a mirror surface (12);

(d42) multiplying, if said second surface patch is a mirror surface (12), said luminous intensity obtained at step (d4) by a mirror surface reflectance;

(d43) deriving an angle of reflection from an angle of incidence of said light ray relative to said mirror surface (12).

**3.** The method according to claim 2 wherein said step (d3) comprising the steps of:

(d31) converting said angle of radiation of said light ray into three-dimensional components in a rectangular coordinate system;

(d32) computing, whenever said light ray arrives at each block (30), a distance between a point of incidence and a plane of said each block (30) in each of three directions;

(d33) finding a shortest distance from among three distances obtained at step (d32); and

(d34) determining as to whether a plane closest to said point of incidence is a solid surface.

**4.** The method according to claim 3 wherein said step (d1) comprising the step of:

(d11) dividing an imaginary hemisphere supposed to lie over a center of said first surface patch (11) into a plurality of sections having substantially a same area so that a plurality of light rays are radiated from said center in generally equally spaced different directions.

**5.** A method according to claim 1, said lighting environment accomodating at least one object, wherein step (a) is realized by defining coordinates of a plurality of planes (X-Y, Y-Z, Z-X) extending in three directions (X, Y, Z) perpendicular to each other;

said plurality of planes (X-Y, Y-Z, Z-X) dividing an entire internal space defined in said lighting environment into a plurality of blocks (30), thereby finely dividing all surfaces constituting an entire internal surface of said lighting environment into a plurality of first meshes (31) each constituting a surface patch (11) and having an arbitrary rectangular configuration;

combining and/or dividing small meshes (31) and flat meshes (31) among all said first meshes (31) except those of said object, thereby reforming said small meshes (31) and flat meshes (31) into second meshes (31) having an aspect ratio closer to one and greater dimensions.

6. An apparatus for analyzing a lighting environment comprising:
means (S21) for dividing a lighting environment into a plurality of blocks (30), thereby dividing all surfaces defining said lighting environment into a plurality of surface patches;
means (S21) for searching a first surface patch (11) radiating a most light energy;
means (S22) for determining as to whether a quantity of light radiated from said first surface patch (11) exceeds a given value;
means (S23) for computing the quantity of light radiated from said first surface patch (11) which arrives at each of said plurality of surface patches, said means (S23) for computing the quantity of light comprising:
means (S31) for computing an angle of radiation of each of a predetermined number of light rays radiated from said first surface patch (11); and
means (S33) for searching a second surface patch at which each light ray arrives;
means (S38) for determining said predetermined number of light rays according to the quantity of light radiated from said first surface patch (11); and
means (S39) for computing a quantity of light which arrives at each of said surface patches.

7. An apparatus according to claim 6
characterized by means (S35) for determining as to whether said second surface patch is a mirror surface (12); and
means (S37) for deriving an angle of reflection from an angle of incidence of a light ray reflected by said mirror surface (12);
wherein said means (S21) for searching said first surface patch (11) also searches a surface patch at which said light ray reflected by said mirror surface (12) arrives.

8. An apparatus according to claim 6 or 7 for analyzing a lighting environment accomodating at least one object, said apparatus being capable of simulating lighting in said lighting environment by tracing trails of light rays from a light source and those of light rays reflected by surfaces defining said lighting environment, said apparatus comprising:
a computer means;
means (S11) for inputting into said computer means coordinates of a plurality of planes (X-Y, Y-Z, Z-X) extending in three directions (X, Y, Z) perpendicular to each other;
said plurality of planes (X-Y, Y-Z, Z-X) dividing an entire internal space defined in said lighting environment into a plurality of blocks (30), thereby finely dividing all surfaces constituting an entire internal surface of said lighting environment into a plurality of first meshes (31) each constituting a surface patch (11) and having an arbitrary rectangular configuration;
means (S60) for combining and/or dividing small meshes (31) and flat meshes (31) among all said first meshes (31) except those of said object, thereby reforming said small meshes (31) and flat meshes (31) into second meshes (31) having an aspect ratio closer to one and greater dimensions;
means (S17) for performing operations to obtain a quantity of light received by each of said first second meshes (31) by making said computer means trace the trails of said light rays which pass through said blocks (30); and
means (S19, S62) for performing operations to obtain a quantity of reflected light of each of said first and second meshes (31) in accordance with a quantity of light received thereby.

**Patentansprüche**

1. Verfahren zur Analyse einer Belichtungsumgebung, mit folgenden Verfahrensschritten:
(a) Aufteilen einer Belichtungsumgebung in eine Vielzahl von Blöcken (30), wobei alle die Belichtungsumgebung definierenden Oberflächen in eine Vielzahl von Oberflächenstücke aufgeteilt werden;
gekennzeichnet durch
(b) Suchen eines ersten Oberflächenstücks (11), das die größte Lichtenergie abstrahlt;
(c) Feststellen, ob eine Lichtmenge, die von diesem ersten Oberflächenstück (11) abgestrahlt wird, einen vorgegebenen Wert überschreitet;
(d) Berechnen der von dem ersten Oberflächenstück (11) abgestrahlten Lichtmenge, die bei jedem der Vielzahl von Oberflächenstücken ankommt, mit folgenden Verfahrensschritten:
(d1) Berechnen eines Strahlungswinkels eines von dem ersten Oberflächenstück (11) abgestrahlten Lichtstrahls;
(d2) Berechnen einer Beleuchtungsstärke des dem Strahlungswinkel zugeordneten Lichtstrahls;
(d3) Suchen eines zweiten Oberflächenstücks, auf dem der Lichtstrahl ankommt;
(d4) Addieren der Beleuchtungsstärke des Lichtstrahls auf dem zweiten Oberflächenstück; und
(d5) Feststellen, ob die Anzahl von Lichtstrahlen, die von dem ersten Oberflächenstück (11) abgestrahlt wurden, eine vorgegebene Anzahl überschreitet, wobei die Anzahl der Lichtstrahlen von der Lichtmenge abhängt, die von dem ersten Oberflächenstück (11) abgestrahlt wird;

(e) Addieren der Lichtmenge, die an dem zweiten Oberflächenstück ankommt;

(f) Multiplizieren der mit Verfahrensschritt (e) erhaltenen Lichtmenge mit dem Remissionsgrad des zweiten Oberflächenstücks;

(g) Setzen der von dem ersten Oberflächenstück (11) abzustrahlenden Lichtmenge zu Null;

(h) Wiederholen der Verfahrenschritte (b) bis (f).

**2.** Verfahren nach Anspruch 1, bei dem der Verfahrensschritt (d4) ferner die folgenden Verfahrensschritte enthält:

(d41) Feststellen, ob das zweite Oberflächenstück eine Spiegeloberfläche (12) ist;

(d42) Falls das zweite Oberflächenstück eine Spiegeloberfläche (12) ist, Multiplizieren der in Verfahrensschritt (d4) erhaltenen Beleuchtungsstärke mit einem Spiegeloberflächen-Remissionsgrad;

(d43) Ableiten eines Reflexionswinkels aus einem Einfallwinkel des Lichtstrahls relativ zur Spiegeloberfläche (12).

**3.** Verfahren nach Anspruch 2, bei dem der Verfahrensschritt (d3) ferner die folgenden Verfahrensschritte enthält:

(d31) Umwandeln des Strahlungswinkels des Lichtstrahls in dreidimensionale Komponenten in einem rechtwinkligen Koordinatensystem;

(d32) Berechnen des Abstands zwischen einem Einfallpunkt und einer Ebene jedes der Blöcke (30) in jeder von drei Richtungen, wennimmer der Lichtstrahl an jedem Block (30) ankommt;

(d33) Auffinden eines kürzesten Abstands aus drei im Verfahrensschritt (d32) erhaltenen Abständen; und

(d34) Feststellen, ob eine Ebene, die dem Einfallpunkt am nächsten liegt, eine feste Oberfläche ist.

**4.** Verfahren nach Anspruch 3, bei dem der Verfahrensschritt (d1) ferner die folgenden Verfahrensschritte enthält:

(d11) Aufteilen einer imaginären Hemisphäre, von der angenommen wird, daß sie über einem Zentrum des ersten Oberflächenstücks (11) liegt, in eine Vielzahl von Abschnitten mit in etwa gleicher Fläche, so daß eine Vielzahl von Lichtstrahlen von dem Zentrum in überwiegend gleich beabstandete unterschiedliche Richtungen abgestrahlt werden.

**5.** Verfahren nach Anspruch 1, mit wenigstens einem in der Belichtungsumgebung aufgenommen Objekt, bei dem der Verfahrensschritt (a) dadurch verwirklicht wird, daß Koordinaten einer Vielzahl von Ebenen (X-Y, Y-Z, Z-X) definiert werden, die sich rechtwinklig zueinander in drei Richtungen (X, Y, Z) erstrecken;

bei dem die Vielzahl der Ebenen (X-Y, Y-Z, Z-X) den gesamten, in der Belichtungsumgebung definierten Innenraum in eine Vielzahl von Blöcken (30) aufteilen, wobei alle Oberflächen, die eine vollständige interne Oberfläche der Belichtungsumgebung bilden, in eine Vielzahl erster Maschen (31) fein aufgeteilt werden, von denen jede ein Oberflächenstück (11) bildet und eine willkürliche rechtwinklige Konfiguration aufweist;

bei dem kleine Maschen (31) und flache Maschen (31) unter allen ersten Maschen (31) mit Ausnahme derjenigen des Objekts kombiniert und/oder aufgeteilt werden, wobei die kleinen Maschen (31) und die flachen Maschen (31) in zweite Maschen (31) mit einem Seitenverhältnis näher bei eins und mit größeren Abmessungen umformiert werden.

**6.** Vorrichtung zur Analyse einer Belichtungsumgebung, mit

Mitteln (S21) zum Aufteilen einer Belichtungsumgebung in eine Vielzahl von Blocks (30), wobei alle die Belichtungsumgebung definierenden Oberflächen in eine Vielzahl von Oberflächenstücke aufgeteilt werden;

Mitteln (S21) zum Suchen eines ersten Oberflächenstücks (11), das eine größte Lichtenergie abstrahlt;

Mitteln (S22) zum Feststellen, ob eine Lichtmenge, die von diesem ersten Oberflächenstück (11) abgestrahlt wird, einen vorgegebenen Wert überschreitet;

Mitteln (S23) zum Berechnen der von dem ersten Oberflächenstück (11) abgestrahlten Lichtmenge, die bei jedem der Vielzahl von Oberflächenstücken ankommt, wobei die Mittel (S23) zum Berechnen der Lichtmenge folgendes enthalten:

Mittel (S31) zum Berechnen eines Strahlungswinkels eines von dem ersten Oberflächenstück (11) abgestrahlten Lichtstrahls; und

Mittel (S33) zum Suchen eines zweiten Oberflächenstücks, auf dem jeder Lichtstrahl ankommt;

Mitteln (S38) zum Bestimmen der vorbestimmten Anzahl von Lichtstrahlen gemäß der von dem ersten Oberflächenstück (11) abgestrahlten Lichtmenge; und mit

Mitteln (S39) zum Berechnen der Lichtmenge, die an jedem der Oberflächenstücke ankommt.

7. Vorrichtung nach Anspruch 6,
gekennzeichnet durch Mittel (S35) zum Feststellen, ob das zweite Oberflächenstück eine Spiegeloberfläche (12) ist; und durch
Mittel (S37) zum Ableiten eines Reflexionswinkels aus einem Einfallwinkel eines Lichtstrahls, der von der Spiegeloberfläche (12) reflektiert wird;
wobei das Mittel (S21) zum Suchen des ersten Oberflächenstücks (11) auch ein Oberflächenstück sucht, auf dem der von der Spiegeloberfläche (12) reflektierte Lichtstrahl ankommt.

8. Vorrichtung nach Anspruch 6 oder 7 für die Analyse einer Belichtungsumgebung mit wenigstens einem Objekt darin, wobei die Vorrichtung in der Lage ist, Beleuchtung in der Belichtungsumgebung durch Verfolgen der Pfade der Lichtstrahlen einer Lichtquelle und der Lichtstrahlen, die von Oberflächen reflektiert werden, welche die Belichtungsumgebung definieren, zu simulieren, mit
einem Rechnermittel;
Mitteln (S11) zum Eingeben von Koordinaten einer Vielzahl von Ebenen (X-Y, Y-Z, Z-X), die sich rechtwinklig zueinander in drei Richtungen (X, Y, Z) erstrecken;
wobei die Vielzahl der Ebenen (X-Y, Y-Z, Z-X) den gesamten, in der Belichtungsumgebung definierten Innenraum in eine Vielzahl von Blöcken (30) aufteilen, wodurch alle Oberflächen, die eine vollständige interne Oberfläche der Belichtungsumgebung bilden, in eine Vielzahl erster Maschen (31) fein aufgeteilt werden, von denen jede ein Oberflächenstück (11) bildet und eine willkürliche rechtwinklige Konfiguration aufweist;
Mitteln (S60) zum Kombinieren und/oder Aufteilen kleiner Maschen (31) und flacher Maschen (31) unter allen ersten Maschen (31) mit Ausnahme derjenigen des Objekts, wobei die kleinen Maschen (31) und die flachen Maschen (31) in zweite Maschen (31) mit einem Seitenverhältnis näher bei eins und mit größeren Abmessungen umformiert werden;
Mitteln (S17) zum Durchführen von Operationen mit dem Ziel, eine Lichtmenge zu erhalten, die von jeder der ersten und zweiten Maschen (31) empfangen wurde, indem das Rechnermittel veranlaßt wird, die Pfade der Lichtstrahlen zu verfolgen, die durch die Blöcke (30) verlaufen; und mit
Mitteln (S19, S62) zum Durchführen von Operationen mit dem Ziel, eine reflektierte Lichtmenge von jeder der ersten und zweiten Maschen (31) gemäß einer dabei empfangenen Lichtmenge zu erhalten.

**Revendications**

1. Procédé d'analyse d'un environnement lumineux comprenant les étapes de :
(a) division d'un environnement lumineux en une pluralité de blocs (30), divisant ainsi toutes les surfaces définissant ledit environnement lumineux en une pluralité de secteurs de surface ;
caractérisé par
(b) recherche d'un premier secteur de surface (11) émettant le plus d'énergie lumineuse ;
(c) détermination de si oui ou non une quantité de lumière émise par ledit premier secteur de surface (11) dépasse une valeur donnée ;
(d) calcul de la quantité de lumière émise par ledit premier secteur de surface (11) qui arrive au niveau de ladite pluralité de secteurs de surface, ladite étape (d) comprenant les étapes de :
(d1) calcul d'un angle d'émission d'un rayon de lumière émis par ledit premier secteur de surface (11) ;
(d2) calcul d'une intensité lumineuse dudit rayon de lumière associé audit angle d'émission ;
(d3) recherche d'un second secteur de surface au niveau duquel ledit rayon de lumière arrive ;
(d4) addition de ladite intensité lumineuse dudit rayon de lumière au niveau dudit second secteur de surface ; et
(d5) détermination de si oui ou non le nombre de rayons de lumière émis par ledit premier secteur de surface (11) dépasse un nombre donné, ledit nombre de rayons de lumière dépendant de la quantité de lumière émise par ledit premier secteur de surface (11) ;
(e) addition de la quantité de lumière qui arrive au niveau dudit second secteur de surface ;
(f) multiplication de la quantité de lumière obtenue à l'étape (e) par un facteur de réflexion diffuse dudit second secteur de surface ;
(g) remise à zéro de la quantité de lumière devant être émise par ledit premier secteur de surface (11) ;
(h) répétition desdites étapes (b) à (f).

2. Procédé selon la revendication 1, dans lequel ladite étape (d4) comprend les étapes de :
(d41) détermination de si oui ou non ledit second secteur de surface est une surface de miroir (12) ;

(d42) multiplication, si ledit second secteur de surface est une surface de miroir (12), de ladite intensité lumineuse obtenue à l'étape (d4) par un facteur de réflexion de surface de miroir ;
(d43) dérivation d'un angle de réflexion à partir d'un angle d'incidence dudit rayon de lumière par rapport à ladite surface de miroir (12).

**3.** Procédé selon la revendication 2, dans lequel ladite étape (d3) comprend les étapes de :
(d31) conversion dudit angle d'émission dudit rayon de lumière en composantes tridimensionnelles dans un système de coordonnées rectangulaire ;
(d32) calcul, chaque fois que ledit rayon de lumière arrive au niveau de chaque bloc (30), d'une distance entre un point d'incidence et un plan de chaque dit bloc (30) dans chacune des trois directions ;
(d33) découverte d'une plus courte distance parmi les trois distances obtenues à l'étape (d32) ; et
(d34) détermination de si oui ou non un plan le plus proche dudit point d'incidence est une surface de solide.

**4.** Procédé selon la revendication 3, dans lequel ladite étape (d1) comprend l'étape de :
(d11) division d'un hémisphère imaginaire supposé être situé sur un centre dudit premier secteur de surface (11) en une pluralité de sections présentant sensiblement une même surface de manière à ce qu'une pluralité de rayons de lumière soient émis par ledit centre dans différentes directions généralement espacées d'une manière égale.

**5.** Procédé selon la revendication 1, ledit environnement lumineux comportant au moins un objet, dans lequel l'étape (a) est réalisée en définissant des coordonnées d'une pluralité de plans (X-Y, Y-Z, Z-X) s'étendant dans trois directions (X, Y, Z) perpendiculaires l'une à l'autre ; ladite pluralité de plans (X-Y, Y-Z, Z-X) divisant un espace intérieur dans sa totalité défini dans ledit environnement lumineux en une pluralité de blocs (30), divisant ainsi finement toutes les surfaces constituant une surface interne dans sa totalité dudit environnement lumineux en une pluralité de premières mailles (31), chacune d'entre elles constituant un secteur de surface (11) et présentant une configuration rectangulaire arbitraire ;
combinaison et/ou division de petites mailles (31) et de malles plates (31) prises parmi toutes lesdites premières mailles (31) sauf celles dudit objet, reconfigurant ainsi lesdites petites mailles (31) et lesdites mailles plates (31) en secondes malles (31) présentant un rapport d'aspect plus proche de un et des dimensions plus importantes.

**6.** Appareil permettant d'analyser un environnement lumineux comprenant :
un moyen (S21) permettant de diviser un environnement lumineux en une pluralité de blocs (30), divisant ainsi toutes les surfaces définissant ledit environnement lumineux en une pluralité de secteurs de surface ;
un moyen (S21) permettant de rechercher un premier secteur de surface (11) émettant une énergie lumineuse plus importante ;
un moyen (S22) permettant de déterminer si oui ou non une quantité de lumière émise par ledit premier secteur de surface (11) dépasse une valeur donnée ;
un moyen (S23) permettant de calculer la quantité de lumière émise par ledit premier secteur de surface (11) qui arrive au niveau de chaque dite pluralité de secteurs de surface, ledit moyen (S23) permettant de calculer la quantité de lumière comprenant :
un moyen (S31) permettant de calculer un angle de rayonnement de chaque nombre prédéterminé de rayons de lumière émis par ledit premier secteur de surface (11); et
un moyen (S33) permettant de rechercher un second secteur de surface au niveau duquel chaque rayon de lumière arrive ;
un moyen (S38) permettant de déterminer ledit nombre prédéterminé de rayons de lumière selon la quantité de lumière émise par ledit premier secteur de surface (11) ; et
un moyen (S39) permettant de calculer une quantité de lumière qui arrive au niveau de chacun desdits secteurs de surface.

**7.** Appareil selon la revendication 6,
caractérisé par un moyen (S35) permettant de déterminer si ledit second secteur de surface est une surface de miroir (12); et
un moyen (S37) permettant de dériver un angle de réflexion à partir d'un angle d'incidence d'un rayon de lumière réfléchi par ladite surface de miroir (12) ;
dans lequel ledit moyen (S21) permettant de rechercher ledit premier secteur de surface (11) recherche aussi un secteur de surface au niveau duquel ledit rayon de lumière réfléchi par ladite surface de miroir (12) arrive.

**8.** Appareil selon la revendication 6 ou 7 permettant d'analyser un environnement lumineux incluant au moins un objet, ledit appareil permettant de simuler un éclairage dans ledit environnement lumineux en traçant des trajectoires de rayons de lumière provenant d'une source de lumière et celles de rayons de lumière réfléchis par des surfaces définissant ledit environnement lumineux, ledit appareil comprenant :

un moyen d'ordinateur ;

un moyen (S11) permettant d'entrer dans ledit moyen d'ordinateur des coordonnées d'une pluralité de plans (X-Y, Y-Z, Z-X) s'étendant dans trois directions (X, Y, Z) perpendiculaires l'une à l'autre ;

ladite pluralité de plans (X-Y, Y-Z, Z-X) divisant un espace interne entier défini dans ledit environnement lumineux en une pluralité de blocs (30), divisant ainsi d'une manière fine toutes les surfaces constituant une surface interne entière dudit environnement lumineux en une pluralité de premières mailles (31), chacune d'entre elles constituant un secteur de surface (11) et présentant une configuration rectangulaire arbitraire ;

un moyen (S60) permettant de combiner et/ou de diviser des petites mailles (31) et des malles plates (31) prises parmi toutes lesdites premières mailles (31) sauf celles dudit objet, reconfigurant ainsi lesdites petites mailles (31) et lesdites malles plates (31) en secondes mailles (31) présentant un rapport d'aspect plus proche de un et des dimensions plus importantes ;

un moyen (S17) permettant de réaliser des opérations afin d'obtenir une quantité de lumière reçue par chacune desdites premières et secondes malles (31) en faisant tracer audit moyen d'ordinateur les trajectoires desdits rayons lumineux qui passent au travers desdits blocs (30) ; et

un moyen (S19, S62) permettant de réaliser des opérations pour obtenir une quantité de lumière réfléchie de chacune desdites première et seconde mailles (31) selon une quantité de lumière reçue par celles-ci.

*Fig.1 PRIOR ART*

START
COMPUTE ANGLE
S1
COMPUTE INTENSITY
S2
SEARCH PATCH AT WHICH LIGHT ARRIVES
S3
ADD INTENSITY
S4
ALL LINES EMITTED ?
S5
NO
YES
COMPUTE QUANTITY OF LIGHT RECEIVED
S6
END

*Fig. 2 PRIOR ART*

Z
21
21
21
21
21
21
20
X
21
21
21
21
21
31
Y

*Fig.3 PRIOR ART*

START
INPUT COORDINATE
S11
INPUT PHYSICAL PROPERTIES
S12
SEARCH MAX. REF. SURFACE
S13
DETERMINE ANGLE
S14
COMPUTE INTENSITY
S15
FIND FORM-FACTOR
S16
FIND QUANTITY OF LIGHT RECEIVED
S17
ADD QUANTITY OF LIGHT
S18
FIND QUANTITY OF REFLECTED LIGHT
S19
S20
TOTAL QUANTITY ≥PREDETER. QUANTITY
YES
NO
END

# *Fig.4 PRIOR ART*

INPUT MEANS
MEMORY
1
2
MAX. REF. SURFACE SEARCH MEANS
3
ANGLE DETER. MEANS
4
INTENSITY COMPUT. MEANS
5
FORM-FACTOR OPERATION MEANS
6
REC. QUANTITY OPERATION MEANS
7
ADD. MEANS
8
REF. QUANTITY OPERATION MEANS
9
COMPAR. MEANS
10

*Fig.5*

START
SEARCH BRIGHTEST PATCH
S21
S22
QUANTITY RADIATED ≧GIVEN VALUE
NO
YES
COMPUTE QUANTITY RECEIVED
S23
ADD QUANTITY RECEIVED
S24
COMPUTE QUANTITY TO BE RADIATED
S25
END

Fig. 6
11
12

Fig. 8
11
12

*Fig.7*

START
COMPUTE ANGLE
S31
COMPUTE INTENSITY
S32
SEARCH PATCH AT WHICH LIGHT ARRIVES
S33
COMPUTE ANGLE OF REFLECTION
S37
ADD INTENSITY
S34
COMPUTE INTENSITY OF REF. LIGHT
S36
S35
MIRROR SURFACE?
YES
NO
S38
ALL RAYS RADIATED ?
NO
YES
COMPUTE QUANTITY OF LIGHT RECEIVED
S39
END

Fig. 9
y
b
d
d'
x
a
z

Fig. 10
y
x
z

*Fig.11*

START
DIVIDE ZENITHAL ANGLE BY N
S41
b = π/8N + π/4N i (i = 1,N)
S42
M = INT [ 4Ncos b] +1
S43
a = 2π/M j ( j = 1,M )
S44
T = sin b × 4Ncos b/M
S45
END

*Fig.12*

START
CONVERT ANGLES
S51
COMPUTE THREE DISTANCES
S52
FIND SHORTEST DISTANCE
S53
S54
SOLID SURFACE?
NO
YES
END

NUMBER OF RAYS RADIATED
0
1000
2000
3000
4000
5000
ERRORS (%)
20
15
10
5
0

Fig. 13

Fig. 14

Z
30
30
X
Y

Fig. 15

Z
31
32
31
31
32
31
30
X
31
32
32
31
31
31
Y

Fig.16
START
INPUT COORDINATE
S11
REFORM SMALL MESHES
S60
INPUT PHYSICAL PROPERTIES
S12
SEARCH MAX. REF. SURFACE
S13
DETERMINE ANGLE
S14
COMPUTE INTENSITY
S15
FIND FORM-FACTOR
S16
FIND QUANTITY OF LIGHT RECEIVED
S17
ADD QUANTITY OF LIGHT
S18
FIND QUANTITY OF REF. LIGHT OF TRAC. MESH
S19
FIND QUANTITY OF REF. LIGHT OF REF. MESH
S62
S20
TOTAL QUANTITY ≧PREDETER. QUANTITY
YES
NO
END

Fig. 17
INPUT MEANS
MEMORY
1
2
MESH REFORM. MEANS
MEMORY
60
61
MAX. REF. SURFACE SEARCH MEANS
3
ANGLE DETER. MEANS
4
INTENSITY COMPUT. MEANS
5
FORM-FACTOR OPERATION MEANS
6
REC. QUANTITY OPERATION MEANS
7
ADD. MEANS
8
REF. QUANTITY OPE. MEANS FOR TRAC. MESH
9
REF. QUANTITY OPE. MEANS FOR REF. MESH
62
COMPAR. MEANS
10